# EUROPÄISCHE PATENTSCHRIFT

(11) **EP 1 662 106 B1**
(45) Veröffentlichungstag und Bekanntmachung des Hinweises auf die Patenterteilung: **14.03.2007**
(21) Anmeldenummer: 05021921.1
(22) Anmeldetag: 07.10.2005
(51) Int. Cl.: F01N 3/20, F01N 3/08, F01N 7/04, F02B 37/007

(54) **Abgasanlage für eine Brennkraftmaschine**
Exhaust system for an internal combustion engine
Système d'échappement pour moteurs à combustion interne

(30) Priorität: 26.11.2004 DE 102004057129
(43) Veröffentlichungstag der Anmeldung: 31.05.2006
(73) Patentinhaber: Bayerische Motorenwerke Aktiengesellschaft, 80809 München (DE)
(72) Erfinder: Tribulowski, Jan, Dr., 85283 Wolnzach (DE); Fahl, Thomas, 80802 München (DE)

(56) Entgegenhaltungen:
- EP-A- 1 180 583
- EP-A- 1 180 586
- DE-A1- 19 645 226
- US-A- 3 943 710
- US-A- 5 956 949
- US-A1- 2002 100 273
- PATENT ABSTRACTS OF JAPAN Bd. 015, Nr. 378 (M-1161), 24. September 1991 (1991-09-24) & JP 03 151519 A (TOYOTA MOTOR CORP), 27. Juni 1991 (1991-06-27)

## Beschreibung

Die Erfindung betrifft eine Abgasanlage für eine Brennkraftmaschine mit den Merkmalen aus dem Oberbegriff des Patentanspruchs 1.

Sie geht von der noch nicht veröffentlichten deutschen Patentanmeldung DE 10 2004 035 324 aus. In dieser ist eine Abgasanlage für eine Brennkraftmaschine mit einer ersten Zylindergruppe und einer zweiten Zylindergruppe beschrieben. Jeder Zylindergruppe ist ein eigener Abgasstrang zugeordnet, wobei in jedem Abgasstrang eine Abgasreinigungsanlage vorgesehen ist. Zwischen der Brennkraftmaschine und den Abgasreinigungsanlagen ist ein Stellelement angeordnet, mit dem die beiden Abgasstränge gasführend verbindbar sind. In Strömungsrichtung vor den Abgasreinigungsanlagen sind die Abgasstränge gasführend miteinander verbunden.

Auch wenn in der zitierten Patentanmeldung nicht explizit beschrieben ist, dass diese auch mager betreibbar ist, ist dem Fachmann allgemein bekannt, dass gattungsgemäße Brennkraftmaschinen mager, d. h. mit einem Luftüberschuss, betrieben werden können. Weiter ist dem Fachmann bekannt, dass Brennkraftmaschinen, die mit überstöchiometrischem Kraftstoff-LuftVerhältnis betrieben werden zur Konvertierung der NOx-Emissionen über mindestens einen DeNOx-Katalysator, einer Stickoxidabgasreinigungsanlage, verfügen. DeNOx-Katalysatoren benötigen je nach Größe der Brennkraftmaschine enorm viel Bauraum und sind sehr temperaturempfindlich. Besonders bei hohen Lasten und hohen Abgasmassenströmen dürfen die Eintrittstemperaturen eine festgesetzte Maximaltemperatur (z. B. 700°C) nicht überschreiten, da sonst eine thermische Beschädigung eintritt.

Aufgabe der vorliegenden Erfindung ist es, in eine gattungsgemäße Abgasanlage eine Stickoxidabgasreinigungsanlage zu integrieren, wobei einer thermischen Zerstörung vorgebeugt ist.

Diese Aufgabe wird vorrichtungsmäßig durch die Merkmale im kennzeichnenden Teil des Patentanspruchs 1 und verfahrensmäßig durch die Merkmale im kennzeichnenden Teil der Patentansprüche 5 und 6 gelöst.

Erfindungsgemäß ist die zweite Abgasreinigungsanlage, die Stickoxidabgasreinigungsanlage, räumlich hinter der ersten Abgasreinigungsanlage, einem Drei-Wege-Katalysator, hier auch gleichzeitig der Hauptkatalysator, angeordnet. Für den Kaltstart und Warmlauf der Brennkraftmaschine wird das Stellelement, eine Abgasklappe, geöffnet und beide Abgasstränge werden von dem Abgas der Brennkraftmaschine durchströmt. Hierdurch erreichen beide Abgasreinigungsanlagen schnell ihre Betriebstemperatur. Beim Übergang in den überstöchiometrischen Betrieb, d. h. in den mageren Betrieb mit Luftüberschuss, wird das Stellelement geschlossen und das gesamte Abgas strömt nun ausschließlich durch die zweite Abgasreinigungsanlage, die Stickoxidabgasreinigungsanlage. Da durch den abgeschalteten Abgasstrang keine oder fast keine kalten Abgase mehr strömen, kühlt die erste Abgasreinigungsanlage nicht bzw. nur sehr langsam aus und behält über eine längere Zeitspanne ihre Betriebstemperatur. Leckagemengen an dem Stellelement werden durch die noch betriebswarme erste Abgasreinigungsanlage im abgeschalteten Abgasstrang konvertiert. In der erforderlichen Regenerationsphase der zweiten Abgasreinigungsanlage, der Stickoxidabgasreinigungsanlage, in der das Kraftstoff-Luft-Gemisch stöchiometrisch oder unterstöchiometrisch, d. h. mit Kraftstoffüberschuss, eingestellt ist, kann das Stellelement wieder geöffnet werden. Dadurch ist es möglich, die erste Abgasreinigungsanlage wieder aufzuheizen. Das Öffnen des Stellelementes in der Regenerationsphase erfolgt vorzugsweise in Abhängigkeit von der Temperatur der ersten Abgasreinigungsanlage, um ein Auskühlen der Abgasreinigungsanlage zu verhindern und in Abhängigkeit des Beladungszustandes der zweiten Abgasreinigungsanlage, der Stickoxidabgasreinigungsanlage. Bei höheren Lasten (stöchiometrischer Betrieb) bzw. im Volllastbetrieb wird das Stellelement betriebspunktabhängig geöffnet. Der Abgasmassenstrom teilt sich wieder gleichmäßig auf beide Abgasstränge auf.

In einer weiteren Ausführungsform kann gemäß Patentanspruch 2 im zweiten Abgasstrang in Strömungsrichtung vor der zweiten Abgasreinigungsanlage ein erster Abgasturbolader angeordnet sein. In vorteilhafter Weise kann die erfindungsgemäße Ausgestaltung auch für aufgeladene Brennkraftmaschinen eingesetzt werden.

In einer weiteren Ausführungsform gemäß Patentanspruch 3 kann im ersten Abgasstrang in Strömungsrichtung vor der zweiten Abgasreinigungsanlage ein zweiter Abgasturbolader angeordnet sein. Somit ist die erfindungsgemäße Ausgestaltung auch für Bi-Turbo betriebene Brennkraftmaschinen einsetzbar.

Gemäß Patentanspruch 4 kann zumindest eine weitere Abgasreinigungsanlage in jedem Abgasstrang vorgesehen sein. Derartige Vorkatalysatoren erreichen schnell ihre Betriebstemperatur, wodurch bereits kurz nach einem Kaltstart eine hohe Konvertierungsrate von Schadstoffen erzielt wird.

Eine Brennkraftmaschine mit einer erfindungsgemäßen Abgasanlage wird vorzugsweise nach den Verfahren der Patentansprüche 5 und 6 betrieben.
- Fig. 1: zeigt eine erfindungsgemäße Abgasanlage für eine 8-zylindrige Brennkraftmaschine ohne Abgasturboaufladung,
- Fig. 2: zeigt eine erfindungsgemäße Abgasanlage für eine 8-zylindrige Brennkraftmaschine mit Abgasturboaufladung.

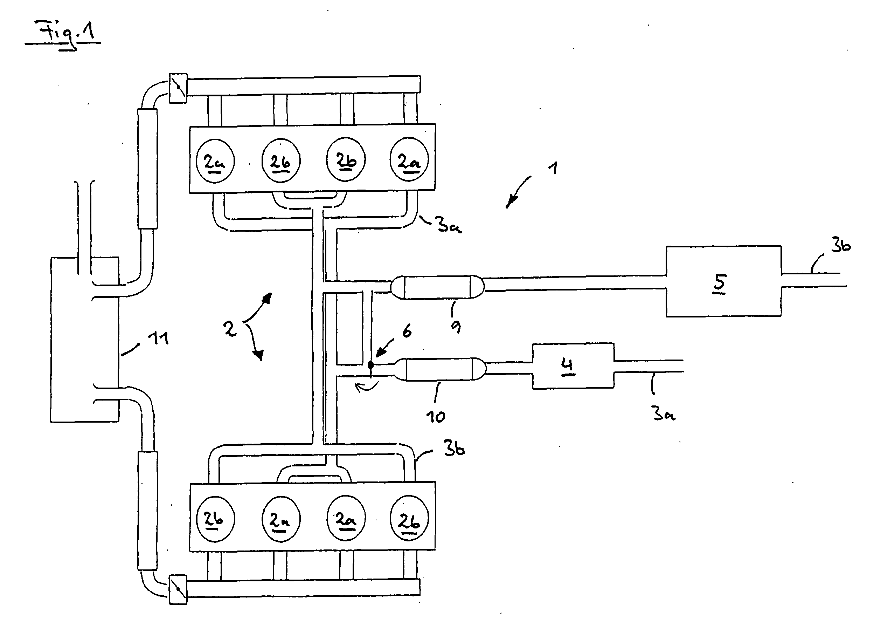

Fig. 1 zeigt eine erfindungsgemäße Abgasanlage 1 beispielsweise für eine 8-zylindrige Brennkraftmaschine 2, mit einer ersten Zylindergruppe 2a und mit einer zweiten Zylindergruppe 2b. Die Zylindergruppen 2a, 2b sind auf zwei Zylinderbänke verteilt und werden von einer gemeinsamen Sauganlage 11 mit Verbrennungsluft beschickt. Jeder Zylindergruppe 2a, 2b ist ein eigener Abgasstrang 3a, 3b zugeordnet. Im ersten Abgasstrang 3a ist eine erste Abgasreinigungsanlage 4, ein Dreiwegekatalysator oder Hauptkatalysator, angeordnet. Zwischen der ersten Zylindergruppe 2a und der ersten Abgasreinigungsanlage 4 ist eine weitere Abgasreinigungsanlage 10, ein Vorkatalysator, in den ersten Abgasstrang 3a integriert. Im zweiten Abgasstrang 3b ist motorfern eine zweite Abgasreinigungsanlage 5, ein DeNOx-Katalysator oder Stickoxidspeicherkatalysator, angeordnet. Zwischen der zweiten Zylindergruppe 2b und der zweiten Abgasreinigungsanlage 5 ist eine weitere Abgasreinigungsanlage 9, ebenfalls ein Vorkatalysator angeordnet. In Gasrichtung vor den weiteren Abgasreinigungsanlagen 9, 10 sind die Abgasstränge 3a, 3b gasführend miteinander verbunden, wobei die Verbindung von einem Stellelement 6, einer Abgasklappe, geöffnet und geschlossen werden kann.

Erfindungsgemäß sind die Abgasstränge 3a, 3b bis nach den Abgasreinigungsanlagen 4, 5 separat ausgeführt und die erste Abgasreinigungsanlage 4 ist brennkraftmaschinennah und die zweite Abgasreinigungsanlage 5 ist brennkraftmaschinenfern angeordnet.

Zum Betrieb der Brennkraftmaschine sind insbesondere zwei unterschiedliche Betriebsverfahren vorgesehen:
1. Bei mager betriebener Brennkraftmaschine 2 wird der erste Abgasstrang 3a von dem Stellelement 6, wie in Fig. 1 dargestellt, verschlossen und die Abgase werden bevorzugt nur durch den zweiten Abgasstrang 3b und somit durch die zweite Abgasreinigungsanlage 5 geleitet.
2. Bei stöchiometrisch und fett betriebener Brennkraftmaschine 2 werden der erste und der zweite Abgasstrang 3a, 3b von dem Stellelement Abgas führend miteinander verbunden und die Abgase durch den ersten und zweiten Abgasstrang 3a, 3b und somit durch beide Abgasreinigungsanlagen 4, 5 geleitet.

Konkret bedeutet dies, dass für den Kaltstart und den Warmlauf der Brennkraftmaschine 2 das Stellelement 6 geöffnet wird, d. h. beide Abgasstränge 3a, 3b werden von Abgas durchströmt. Somit erreichen die Abgasreinigungsanlagen 4, 5 schnell ihre Betriebstemperatur. Beim Übergang in den überstöchiometrischen Betrieb, d. h. in den Betrieb mit Luftüberschuss, wird das Stellelement 6 geschlossen. Das gesamte Abgas wird nun durch die zweite Abgasreinigungsanlage 5, den DeNOx-Katalysator geleitet. Da durch den abgeschalteten Abgasstrang 3a keine relativ kalten Abgase mehr strömen, kühlen dieser und die erste Abgasreinigungsanlage 4 nicht bzw. nur sehr langsam aus und die erste Abgasreinigungsanlage 4 behält somit ihre Betriebstemperatur. Anfallende Leckagemengen von Abgas an dem Stellelement 6 werden durch die noch betriebswarme erste Abgasreinigungsanlage 4 konvertiert. In der erforderlichen Regenerationsphase der zweiten Abgasreinigungsanlage 5, während der das Kraftstoff-Luft-Gemisch stöchiometrisch bzw. unterstöchiometrisch, d. h. mit einem Kraftstoffüberschuss, eingestellt ist, kann das Stellelement 6 geöffnet werden. Dadurch ist es möglich, die weitere Abgasreinigungsanlage 10 und die erste Abgasreinigungsanlage 4 im ersten Abgasstrang 3a wieder aufzuheizen. Das Öffnen des Stellelementes 6 in der Regenerationsphase erfolgt vorzugsweise in Abhängigkeit der Temperatur der ersten Abgasreinigungsanlage 4 im ersten Abgasstrang 3a, um ein Auskühlen der Abgasreinigungsanlagen 4, 5 zu verhindern und in Abhängigkeit des Beladungszustandes der zweiten Abgasreinigungsanlage 5 mit Stickoxiden. Bei höheren Lasten bzw. im Volllastbetrieb, stöchiometrischer und fetter Betrieb, wird das Stellelement 6 betriebspunktabhängig geöffnet. Der Abgasmassenstrom teilt sich gleichmäßig auf die Abgasstränge 3a, 3b auf.

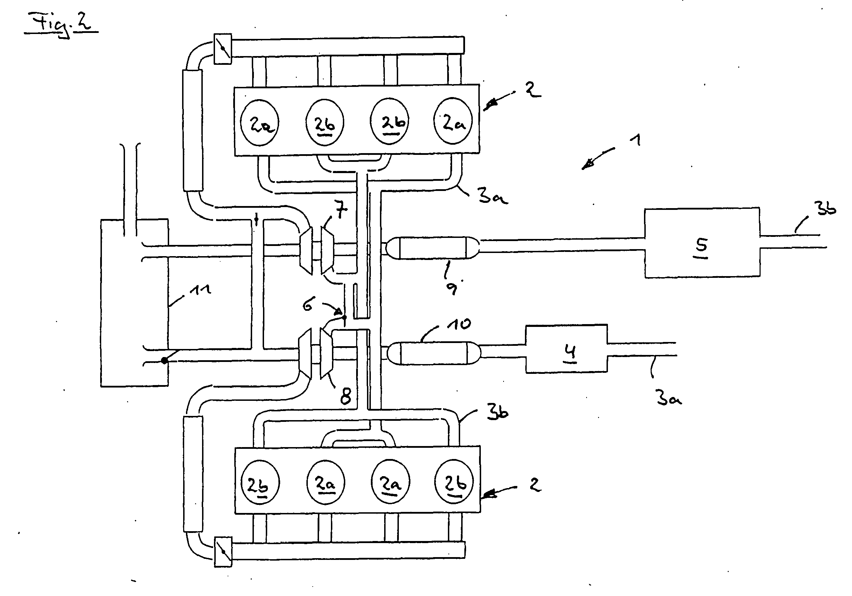

Fig. 2 zeigt eine erfindungsgemäße Abgasanlage für eine aufgeladene 8-zylindrige Brennkraftmaschine 2. Für gleiche Bauteile gelten die gleichen Bezugszeichen wie in Fig. 1. Im Unterschied zum Ausführungsbeispiel in Fig. 1 verfügt das Ausführungsbeispiel in Fig. 2 über zwei Abgasturbolader 7, 8. Der Abgasturbolader 7 ist in dem zweiten Abgasstrang 3b angeordnet, während der zweite Abgasturbolader 8 in dem ersten Abgasstrang 3a angeordnet ist. Funktionstechnisch gelten für beide Ausführungsbeispiele oben genannte Merkmale.

In weiteren Ausführungsbeispielen kann beispielsweise nur in dem zweiten Abgasstrang 3b ein Abgasturbolader 7 vorgesehen sein, während der erste Abgasstrang 3a keinen Abgasturbolader aufweist. Ferner können in anderen Ausführungsbeispielen auch die weiteren Abgasreinigungsanlagen 9, 10 entfallen. Selbstverständlich kann die erfindungsgemäße Ausgestaltung der Abgasanlage 1 auch an 4-, 5- 6-, 10-, oder 12-zylindrigen Brennkraftmaschinen 2 eingesetzt werden.

Insgesamt ergeben sich folgende Vorteile, hier aufgeführt in Verbindung mit weiteren Abgasreinigungsanlagen 9, 10:
1. Im Magerbetrieb strömt das gesamte Abgas nur über die eine weitere Abgasreinigungsanlage 9. Im Vergleich zu einer Standardanordnung wird so eine Wärmesenke vermieden. Die zweite Abgasreinigungsanlage 5, der DeNOx-Katalysator, kann somit auch bei sehr magerem Betrieb der Brennkraftmaschine seine erforderliche Betriebstemperatur erreichen bzw. halten. Folglich sinkt der Kraftstoffbedarf bei gleicher Last, der bei der konventionellen Anordnung zum Erreichen und Halten der Mindestbetriebstemperatur nötig ist. Die Brennkraftmaschine 2 kann somit magerer betrieben werden, was sich positiv auf den Kraftstoffverbrauch auswirkt.
2. Die zweite Abgasreinigungsanlage 5, der DeNOx-Katalysator, kann somit näher an der Brennkraftmaschine 2 platziert werden:
   Im Volllastbetrieb strömen nur 50 % des Gesamtabgases über die zweite Abgasreinigungsanlage 5, der andere Teil über die erste Abgasreinigungsanlage 4. Im Vergleich zur Standardanordnung ergibt sich dadurch eine geringere thermische Belastung der zweiten Abgasreinigungsanlage 5. Die Aufteilung des Abgasmassenstroms führt weiterhin zu einem reduzierten Anfettungsbedarf bei der Volilast, der nötig ist zur Temperatursenkung des Abgases zum Schutz der zweiten Abgasreinigungsanlage 5. Auch dies wirkt sich positiv auf den Kraftstoffverbrauch aus.
   Im Teillastbetrieb sinkt bei räumlich näherer Anordnung der zweiten Abgasreinigungsanlage 5 an die Brennkraftmaschine 2 bei gleicher Last der Kraftstoffbedarf, der bei der konventionellen Anordnung zum Erreichen der Mindestbetriebstemperatur der zweiten Abgasreinigungsanlage 5 nötig ist. Die Brennkraftmaschine kann somit magerer betrieben werden, was sich wiederum positiv auf den Kraftstoffverbrauch auswirkt.
3. Bauraum: Die versetzte Anordnung der zwei Abgasreinigungsanlagen 4, 5 ermöglicht größere Freiheiten bei deren Positionierung.

### Bezugszeichenliste:

- 1: Abgasanlage
- 2: Brennkraftmaschine
- 2a: Erste Zylindergruppe
- 2b: Zweite Zylindergruppe
- 3a: Erster Abgasstrang
- 3b: Zweiter Abgasstrang
- 4: Erste Abgasreinigungsanlage
- 5: Zweite Abgasreinigungsanlage
- 6: Stellelement
- 7: Erster Abgasturbolader
- 8: Zweiter Abgasturbolader
- 9, 10: Weitere Abgasreinigungsanlage
- 11: Sauganlage

## Patentansprüche

1. Brennkraftmaschine (2) mit einer Abgasanlage (1), wobei die Brennkraftmaschine (2) mager betreibbar ist, mit einer ersten Zylindergruppe (2a) der ein erster Abgasstrang (3a) mit einer ersten Abgasreinigungsanlage (4) zugeordnet ist und einer zweiten Zylindergruppe (2b) der ein zweiter Abgasstrang (3b) mit einer zweiten Abgasreinigungsanlage (5) zugeordnet ist, wobei der erste und der zweite Abgasstrang (3a, 3b) in Strömungsrichtung vor den Abgasreinigungsanlagen (4, 5) mit einem Stellelement (6) gasführend miteinander verbindbar sind,
**dadurch gekennzeichnet, dass** die Abgasstränge (3a, 3b) bis nach den Abgasreinigungsanlagen (4, 5) separat ausgeführt sind und die erste Abgasreinigungsanlage (4) brennkraftmaschinennah angeordnet und die zweite Abgasreinigungsanlage (5) eine brennkraftmaschinenfern angeordnete Stickoxid-Abgasreinigungsanlage ist.

2. Brennkraftmaschine nach Patentanspruch 1,
**dadurch gekennzeichnet, dass** im zweiten Abgasstrang (3b) in Strömungsrichtung vor der zweiten Abgasreinigungsanlage (5) ein erster Abgasturbolader (7) angeordnet ist.

3. Brennkraftmaschine nach Patentanspruch 2,
**dadurch gekennzeichnet, dass** im ersten Abgasstrang (3a) in Strömungsrichtung vor der ersten Abgasreinigungsanlage (4) ein zweiter Abgasturbolader (8) angeordnet ist.

4. Brennkraftmaschine nach Patentanspruch 2 oder 3,
**dadurch gekennzeichnet, dass** in Strömungsrichtung vor einer Abgasreinigungsanlage (4, 5) und hinter einem Abgasturbolader (6,7) eine weitere Abgasreinigungsanlage (9, 10) angeordnet ist.

5. Verfahren zum Betrieb einer Brennkraftmaschine mit den Merkmalen aus einem der Patentansprüche 1 bis 4,
**dadurch gekennzeichnet, dass** bei mager betriebener Brennkraftmaschine (2) der erste Abgasstrang (3a) von dem Stellelement (6) verschlossen wird und die Abgase durch den zweiten Abgasstrang (3b) geleitet werden.

6. Verfahren zum Betrieb einer Brennkraftmaschine mit den Merkmalen aus einem der Patentansprüche 1 bis 4,
**dadurch gekennzeichnet, dass** bei stöchiometrisch oder fett betriebener Brennkraftmaschine (2) der erste und der zweite Abgasstrang (3a, 3b) von dem Stellelement (6) zumindest teilweise Abgas führend mit einander verbunden und die Abgase durch den ersten und zweiten Abgasstrang (3a, 3b) geleitet werden.

## Claims

1. An internal combustion engine (2) comprising an exhaust-gas cleaning installation (1), wherein the engine (2) is operable under lean conditions, and comprises a first group of cylinders (2a) associated with a first exhaust-gas line (3a) with a first exhaust-gas cleaning installation (4) and also comprises a second group of cylinders (2b) associated with a second exhaust-gas line (3b) with a second exhaust-gas cleaning installation (5), wherein the first and the second exhaust-gas line (3a, 3b) are connectable to one another for gas flow via an adjusting element (6) upstream of the exhaust-gas cleaning installations (4, 5) in the flow direction,
**characterised in that** the exhaust-gas lines (3a, 3b) are separate as far as the exhaust-gas cleaning installations (4, 5) and the first exhaust-gas cleaning installation (4) is disposed near the engine and the second installation (5), for cleaning nitrogen oxides, is remote from the engine.

2. An engine according to claim 1,
**characterised in that** a first exhaust-gas turbocharger (7) is disposed in the second exhaust line (3b) upstream of the second exhaust-gas cleaning installation (5) in the direction of flow.

3. An engine according to claim 2,
**characterised in that** a second exhaust-gas turbocharger (8) is disposed in the first exhaust line (3a) upstream of the first exhaust-gas cleaning installation (4) in the direction of flow.

4. An engine according to claim 2 or claim 3,
**characterised in that** an additional exhaust-gas cleaning installation (9, 10) is disposed before an exhaust-gas cleaning installation (4, 5) and behind an exhaust-gas turbocharger (6, 7) in the direction of flow.

5. A method of operating an internal combustion engine having the features in any of claims 1 to 4,
**characterised in that** when the engine (2) is in lean operation the first exhaust line (3a) is closed by the adjusting element (6) and the exhaust gases are conveyed through the second exhaust line (3b).

6. A method of operating an engine having the features in any of claims 1 to 4,
**characterised in that** when the engine (2) is in stoichiometric or rich operation the first and the second exhaust line (3a, 3b) are at least partly connected to one another for conveying exhaust gas via the adjusting element (6) and the exhaust gases are conveyed through the first and the second exhaust line (3a, 3b).

## Revendications

1. Moteur à combustion interne (2) avec un système de gaz d'échappement (1), le moteur fonctionnant en régime maigre et présentant un premier groupe de cylindres (2a) auquel est associée une première ligne de gaz d'échappement (3a) avec une première installation d'épuration de gaz (4), et un second groupe de cylindres (2b) auquel est associée une seconde ligne de gaz d'échappement (3b) avec une seconde installation d'épuration de gaz (5), les deux lignes (3a, 3b) pouvant être reliées en écoulement en amont des installations d'épuration (4, 5) par rapport au sens d'écoulement, par un élément de réglage (6),
**caractérisé en ce que**
les lignes de gaz d'échappement (3a, 3b) sont séparées jusqu'en aval des installations d'épuration de gaz (4, 5), dont la première (4) est disposée près du moteur et la seconde (5) est une installation d'épuration en oxyde d'azote des gaz d'échappement, éloignée du moteur.

2. Moteur à combustion interne selon la revendication 1,
**caractérisé en ce que**
dans la seconde ligne de gaz d'échappement (3b), un premier turbo de gaz d'échappement (7) est monté en amont de la seconde installation d'épuration de gaz (5), par rapport au sens d'écoulement.

3. Moteur à combustion interne selon la revendication 2,
**caractérisé en ce que**
dans la première ligne de gaz d'échappement (3a), un second turbo de gaz d'échappement (8) est monté en amont de la première installation d'épuration de gaz (4), par rapport au sens d'écoulement.

4. Moteur à combustion interne selon la revendication 2 ou 3,
**caractérisé en ce que**
par rapport au sens d'écoulement, une autre installation d'épuration de gaz (9, 10) est disposée en amont d'une installation d'épuration de gaz (4) et en aval d'un turbo de gaz d'échappement (6, 7).

5. Procédé pour faire fonctionner un moteur à combustion interne, présentant les caractéristiques d'une des revendications 1 à 4,
**caractérisé en ce que**
quand le moteur (2) fonctionne en régime pauvre, la première ligne de gaz d'échappement (3a) est fermée par l'élément de réglage (6) et les gaz d'échappement s'écoulent à travers la seconde ligne de gaz d'échappement (3b).

6. Procédé pour faire fonctionner un moteur à combustion interne, présentant les caractéristiques d'une des revendications 1 à 4,
**caractérisé en ce que**
quand le moteur (2) fonctionne en régime stoechiométrique ou riche, la première et la seconde ligne de gaz d'échappement (3a, 3b) sont reliées entre elles en écoulement par l'élément de réglage (6) avec passage au moins partiel des gaz d'échappement qui s'écoulent à travers les deux lignes de gaz d'échappement (3a,3b).
